# EUROPEAN PATENT APPLICATION

(11) **EP 4 365 978 A2**
(43) Date of publication of application: **08.05.2024**
(21) Application number: 23197374.4
(22) Date of filing: 14.09.2023
(51) Int. Cl.: H01M 4/133, H01M 4/134, H01M 4/36, H01M 4/38, H01M 4/587

(54) **NEGATIVE ELECTRODE FOR RECHARGEABLE LITHIUM BATTERY AND RECHARGEABLE LITHIUM BATTERY INCLUDING SAME**

(30) Priority: 03.11.2022 KR 20220145385
(71) Applicant: Samsung SDI Co., Ltd., Yongin-si, Gyeonggi-do 17084 (KR)
(72) Inventor: KIM, Yeongap, 17084 Yongin-si (KR)
(74) Representative: Marks & Clerk LLP

(57) **Abstract**

Disclosed are a negative electrode for a rechargeable lithium battery and a rechargeable lithium battery including the negative electrode, and the negative electrode for the rechargeable lithium battery includes a negative active material layer comprising a negative active material including a silicon core and an amorphous carbon layer on a surface of the core, wherein an amount of the carbon-based conductive material is about 10 wt% or more based on the total, 100 wt% of the negative active material layer, and the negative electrode has a peak intensity ratio (I₍₁₁₀₎/I₍₀₀₂₎) at a (110) plane relative to a (002) plane of about 1.0 or more measured by XRD.

## Description

### BACKGROUND OF THE INVENTION

### (a) Field of the Invention

It relates to a negative electrode for a rechargeable lithium battery and a rechargeable lithium battery including the same.

### (b) Description of the Related Art

A rechargeable lithium battery which has recently drawn attention as a power source for small portable electronic devices, uses an organic electrolyte solution and thereby, has twice or more as high a discharge voltage as a conventional battery using an alkali aqueous solution and accordingly, high energy density.

The investigation for a silicon negative active material which has a high discharge specific capacity of about 3400 mAh/g, and is capable of rapid bonding with lithium ions and rapid charging and discharging have been actively undertaken.

However, silicon suffers from cracking due to contraction and expansion during charging and discharging, which leads to the deterioration of cycle-life characteristics.

### SUMMARY OF THE INVENTION

One embodiment provides a negative electrode for a rechargeable lithium battery which is capable of ensuring high energy density and improved cycle-life characteristics.

Another embodiment provides a rechargeable lithium battery including the negative electrode.

One embodiment provides a negative electrode for a rechargeable lithium battery including a negative active material layer comprising a negative active material including a silicon core and an amorphous carbon layer on a surface of the core, and a carbon-based conductive material, wherein an amount of the carbon-based conductive material is about 10 wt% or more based on the total, 100 wt% of the negative active material layer, and, the negative electrode has a peak intensity ratio (I₍₁₁₀₎/I₍₀₀₂₎) at a (110) plane relative to a (002) plane of about 1.0 or more measured by XRD.

The amount of the carbon-based conductive material may be about 10 wt% to about 20 wt% based on the total, 100 wt% of the negative active material layer wt%, or may be about 10 wt% to about 15 wt%.

The peak intensity ratio (I₍₁₁₀₎/I₍₀₀₂₎) may be about 1.0 to about 1.4, or may be about 1.0 to about 1.3.

The amorphous carbon may be soft carbon, hard carbon, mesophase pitch carbide, sintered cokes, or combinations thereof.

The carbon-based conductive material may be natural graphite, artificial graphite, carbon black, carbon nanotube, carbon fiber, or combinations thereof. In one embodiment, the carbon-based conductive material may be a three-mixture of carbon nanotube; natural graphite or artificial graphite; and carbon black.

Another embodiment provides a rechargeable lithium battery including the negative electrode; a positive electrode including a positive active material; and a non-aqueous electrolyte.

At least some of the above and other features of the invention are set out in the claims.

Other embodiments are included in the following detailed description.

A negative electrode for a rechargeable lithium battery according to embodiments may exhibit high energy density and improved cycle-life characteristics.

### BRIEF DESCRIPTION OF THE DRAWINGS

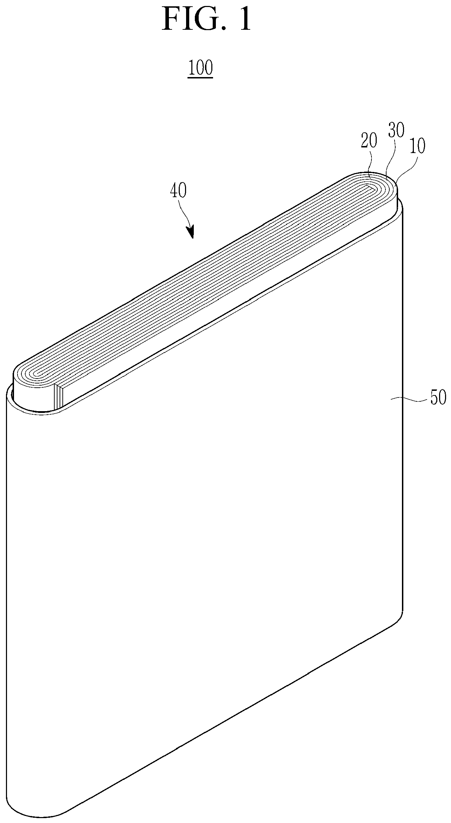

FIG. 1 is a schematic view showing a rechargeable lithium battery according to an embodiment.

### DETAILED DESCRIPTION OF THE INVENTION

Hereinafter, embodiments are described in detail. However, the present invention is not limited to these embodiments and the present invention is defined by the scope of the claims.

In the specification, when a definition is not otherwise provided, such a particle diameter (D50) indicates an average particle diameter (D50) where a cumulative volume is about 50 volume% in a particle distribution. The average particle diameter (D50) may be measured by a method well known to those skilled in the art, for example, by a particle size analyzer, or by a transmission electron microscopic image, or a scanning electron microscopic image. In other embodiments, a dynamic light-scattering measurement device is used to perform a data analysis, and the number of particles is counted for each particle size range, and from this, the average particle diameter (D50) value may be easily obtained through a calculation.

A negative electrode for a rechargeable lithium battery according to one embodiment includes a negative active material layer including a negative active material and a carbon-based conductive material.

The negative active material includes a silicon core and an amorphous carbon layer on a surface of the core. In the negative active material according to one embodiment, the core consists of silicon.

The core, consisting of only silicon may increase an amount of silicon in the negative active material layer, which may increase capacity and may provide high energy density. Furthermore, as the amorphous carbon is positioned on the surface of the silicon, the volume expansion of silicon may be effectively suppressed according to charging and discharging and the side reaction with an electrolyte may be also prevented.

The amorphous carbon may be soft carbon, hard carbon, mesophase pitch carbide, sintered cokes, or combinations thereof.

Because the carbon-based conductive material is used in a large amount of about 10 wt% or more, based on the total 100 wt% of the negative active material layer, the electrical contact between the active materials may be well maintained. The amount of the carbon-based conductive material may be about 10 wt% to about 20 wt%, about 10 wt% to about 15 wt%, or about 10 wt% to about 12 wt% based on the total, 100 wt% of the negative active material layer.

Such improvements in the electrical contact may be very effectively realized from the negative active material including the core consisting of silicon according to some embodiments. In this regard, even if the amorphous carbon layer is surrounding the silicon core, some cracks may occur, which may interrupt the electrical contact between the negative active materials, but the shortcomings related thereto may be effectively prevented by using a large amount of the conductive material.

The effects owing to the large amount of the conductive material may be more effectively realized, if the conductive material is oriented.

In some embodiments, the orientation of the conductive material is confirmed by a peak intensity ratio at a (110) plane relative to a (002) plane, that is, I₍₁₁₀₎/I₍₀₀₂₎, of about 1.0 or more, when the negative electrode is measured by XRD. The peak intensity ratio (I₍₁₁₀₎/I₍₀₀₂₎) may be about 1.0 to about 1.4, about 1.0 to about 1.3, about 1.0 to about 1.2, or about 1.0 to about 1.15. The peak intensity ratio (I₍₁₁₀₎/I₍₀₀₂₎) of about 1.0 or more indicates to appropriately orient the conductive material in the negative active material layer at a predetermined angel with the current collector, and thus, the conductive material is suitably positioned between the negative active materials and the electrical contact may be well maintained, resulting improved cycle-life characteristics.

In some embodiments, the XRD is measured by using a CuKα ray as a target ray and the XRD is measured for the prepared negative electrode. In some embodiments, the XRD measured value may be identically obtained, even though the XRD is measured after the battery is fabricated using the negative electrode, before formation charging and discharging.

The orientation of the conductive material may be obtained by applying a magnetic field during the preparation of a negative active material layer. For example, when a negative active material layer composition for preparing the negative active material layer is coated on a current collector, a magnetic field may be applied to orient. The applying of magnetic field may be carried out by positioning a current collector on a magnet, and then coating the negative active material layer composition on the current collector. The strength of a magnetic field owing to the magnet may be about 2000 Gauss to about 8000 Gauss, or about 3000 Gauss to about 6000 Gauss. After coating, it may be allowed to stand for a predetermined time, for example, may be exposed to the magnetic field generated by the magnet for the predetermined time. The predetermined time may be about 3 seconds to about 9 seconds, or about 5 seconds to about 7 seconds.

The negative active material layer composition may have a viscosity of about 500 cps to about 3500 cps, or about 1300 cps to about 1800 cps at room temperature (about 20 °C to about 25 °C).

The applying of the magnetic field renders the conductive material included in the negative active material layer to orient at a predetermined angle.

The negative active material layer composition may be prepared by mixing the negative active material and a carbon-based conductive material, (and, optionally, a binder) in a solvent. The solvent may be an organic solvent such as N-methyl pyrrolidone or water. This may be suitably selected according to the type of the binder.

In some embodiments, the carbon-based conductive material may be natural graphite, artificial graphite, carbon black, carbon nanotube, carbon fiber, or combinations thereof. The carbon black may be denka black, acetylene black, ketjen black, or combinations thereof, but is not limited thereto. All of these may be referred to as carbon black. In another embodiment, as the carbon-based conductive material, a three type mixture of carbon nanotube, graphite such as natural graphite, or artificial graphite, and carbon black may be used. If the mixture as the carbon-based conductive material is used together with the negative active material including the core consisting of silicon, the shortcomings such as the volume expansion of the negative active material, the cycle-life characteristics fading due to crack occurrence, the broken electrical contact, and the like, may be effectively prevented.

The negative active material layer may include a binder. If the binder is a water-soluble binder in the negative active material layer, the solvent used for preparing the negative active material composition may be water. If the negative active material layer includes the negative active material, the carbon-based conductive material, and the binder, an amount of the carbon-based conductive material may be about 10 wt% or more, for example, about 10 wt% to about 15 wt% based on the total 100 wt% of the negative active material layer, and the amounts of the negative active material and the binder may be suitably controlled. For example, based on the total, 100 wt% of the negative active material layer, an amount of the negative active material may be about 80 wt% to about 89 wt% and an amount of the binder may be about 1 wt% to about 4 wt%.

The binder improves binding properties of negative active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinylchloride, carboxylated polyvinyl chloride, polyvinyl fluoride, polyurethane, polytetrafluoroethylene, polyvinylidene fluoride, polyethylene, polypropylene, polyamideimide, polyimide, or combinations thereof.

The aqueous binder may be styrene-butadiene rubber, an acrylated styrene-butadiene rubber (ABR), an acrylonitrile-butadiene rubber, an acryl rubber, a butyl rubber, a fluorine rubber, an ethylene oxide-containing polymer, polyvinyl pyrrolidone, polyepichlorohydrin, polyphosphazene, ethylenepropylenediene copolymer, polyvinyl pyridine, chlorosulfonated polyethylene, latex, a polyester resin, an acryl resin, a phenol resin, an epoxy resin, polyvinyl alcohol, or combinations thereof.

If the aqueous binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metal may be Na, K, or Li. The cellulose-based compound may be included in an amount of about 0.1 parts by weight to about 3 parts by weight based on 100 parts by weight of the negative active material.

The negative electrode according to one embodiment may include a current collector supporting the negative active material layer.

The current collector may include one selected from a copper foil, a nickel foil, a stainless steel foil, a titanium foil, a nickel foam, a copper foam, a polymer substrate coated with a conductive metal, and a combination thereof, but is not limited thereto.

A rechargeable lithium battery according to another embodiment includes the negative electrode, a positive electrode, and an electrolyte.

The positive electrode may include a positive current collector and a positive active material layer formed on the positive current collector.

The positive active material may include lithiated intercalation compounds that may reversibly intercalate and deintercalate lithium ions, and in another embodiment, one or more composite oxides of a metal selected from cobalt, manganese, nickel, and a combination thereof, and lithium may be used. More specifically, the compounds represented by one of the following chemical formulae may be used. LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α≤2); LiₐNi_{1-b-c}Co_{b}X_{c}O_{2-α}T₂ (0.90≤a≤1.8, 0≤b≤0.5, 0≤c≤0.5, 0<α≤2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<a<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1) LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li _{(3-f})J₂(PO₄)₃ (0≤f≤2); Li _{(3-f)}Fe₂(PO₄)₃ (0≤f≤2); LiₐFePO₄ (0.90≤a≤1.8).

In the above chemical formulas, A is selected from Ni, Co, Mn, or combinations thereof; X is selected from Al, Ni, Co, Mn, Cr, Fe, Mg, Sr, V, a rare earth element, or combinations thereof; D' is selected from O, F, S, P, and combinations thereof; E is selected from Co, Mn, or combinations thereof; T is selected from F, S, P, or combinations thereof; G is selected from Al, Cr, Mn, Fe, Mg, La, Ce, Sr, V, or combinations thereof; Q is selected from Ti, Mo, Mn, and combinations thereof; Z is selected from Cr, V, Fe, Sc, Y, or combination thereof; J is selected from V, Cr, Mn, Co, Ni, Cu, and combination thereof; and, L¹ is selected from Mn, Al, or combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or mixtures thereof. The coating layer may be disposed in a method having no adverse influence on properties of a positive active material by using these elements in the compound. For example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In some embodiments, the positive active material layer may further include a binder and a conductive material. The binder and the conductive material may be included in an amount of about 1 wt% to about 5 wt%, respectively based on the total amount of the positive active material layer.

The binder improves binding properties of positive active material particles with one another and with a current collector. Examples thereof may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, carbon fiber, and the like; a metal-based material of a metal powder or a metal fiber including copper, nickel, aluminium, silver, and the like; material; a conductive polymer such as polyphenylene derivatives; or mixtures thereof.

The current collector may be an aluminium foil, a nickel foil, or combinations thereof, but is not limited thereto.

The positive active material layer may be formed by mixing a positive active material, binder, and optionally a conductive material in a solvent to prepare a positive active material composition and coating the positive active material composition on a current collector. Such a positive active material layer preparation method is well known and thus is not described in detail in the present specification. The solvent includes N-methyl pyrrolidone and the like, but is not limited thereto. If the binder is a water-soluble binder in the positive active material layer, the solvent used for preparing the positive active material composition may be water.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, propyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. The ketone-based solvent may include cyclohexanone, and the like. The alcohol-based solvent may include ethyl alcohol, isopropyl alcohol, and the like, and examples of the aprotic solvent may include nitriles such as R-CN (where R is a C2 to C20 linear, branched, or cyclic hydrocarbon, or may include a double bond, an aromatic ring, or an ether bond), amides such as dimethylformamide, dioxolanes such as 1,3-dioxolane, sulfolanes, and the like.

The non-aqueous organic solvent may be used alone or mixed with one or more. If the non-aqueous organic solvent is used in a mixture, the mixture ratio may be controlled in accordance with a desirable battery performance, and this may be widely understood to one of ordinary skilled in the related arts.

The carbonate-based solvent may include a mixture with a cyclic carbonate and a linear carbonate. The cyclic carbonate and linear carbonate may be mixed together in a volume ratio of about 1:1 to about 1:9. When the mixture is used as an electrolyte, it may have enhanced performance.

When the non-aqueous organic solvent is mixed and used, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be used. The propionate-based solvent may include methyl propionate, ethyl propionate, propyl propionate, or combinations thereof.

If the cyclic carbonate and the chain carbonate or the cyclic carbonate and the propionate-based solvent are mixed, they may be mixed in a volume ratio of about 1:1 to about 1:9 and thus performance of an electrolyte may be improved. If the cyclic carbonate, the chain carbonate, and the propionate-based solvent are mixed, they may be mixed in a volume ratio of about 1:1:1 to about 3:3:4. The mixing ratios of the solvents may be appropriately adjusted according to desirable properties.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

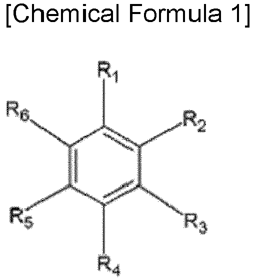

In Chemical Formula 1, R₁ to R₆ are the same or different and are selected from hydrogen, halogen, a C1 to C10 alkyl group, a haloalkyl group, or combinations thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The electrolyte may further include vinylene carbonate, an ethylene carbonate-based compound represented by Chemical Formula 2, or propane sultone, as an additive for improving cycle life.

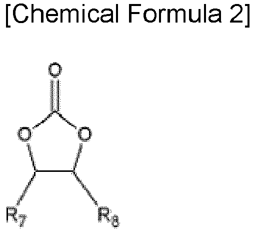

In Chemical Formula 2, R₇ and R₈ are the same or different and may each independently be hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. In case of further using the additive for improving cycle life, an amount of the additive may be suitably controlled within an appropriate range.

The non-aqueous organic solvent may further also include vinylethylene carbonate, propane sultone, succinonitrile, or combinations thereof, and an amount of there may be suitably controlled within an appropriate range.

The lithium salt dissolved in an organic solvent supplies a battery with lithium ions, basically operates the rechargeable lithium battery, and improves transportation of the lithium ions between positive and negative electrodes. Examples of the lithium salt may include at least one or two supporting salts selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), where x and y are a natural numbers, for example, integers of about 1 to about 20), lithium difluoro(bisoxolato) phosphate), LiCl, Lil, LiB(C₂O₄)₂ (lithium bis(oxalato) borate: LiBOB) and lithium difluoro(oxalato)borate (LiDFOB). A concentration of the lithium salt may range from about 0.1 M to about 2.0 M. If the lithium salt is included at the above concentration range, an electrolyte may have excellent performance and lithium ion mobility due to optimal electrolyte conductivity and viscosity.

The rechargeable lithium battery may further include a separator between the negative electrode and the positive electrode, depending on a kind of the battery. Examples of a suitable separator material may include polyethylene, polypropylene, polyvinylidene fluoride, and multi-layers thereof such as a polyethylene/polypropylene double-layered separator, a polyethylene/polypropylene/polyethylene triple-layered separator, a polypropylene/polyethylene/polypropylene triple-layered separator, and the like.

FIG. 1 is an exploded perspective view of a rechargeable lithium battery according to an embodiment. The rechargeable lithium battery according to an embodiment is illustrated as a prismatic battery but is not limited thereto and may include variously-shaped batteries such as a cylindrical battery, a pouch battery, and the like.

Referring to FIG. 1, a rechargeable lithium battery 100 according to embodiments includes an electrode assembly 40 manufactured by winding a separator 30 interposed between a positive electrode 10 and a negative electrode 20, and a case 50 housing the electrode assembly 40. An electrolyte (not shown) may be impregnated in the positive electrode 10, the negative electrode 20, and the separator 30.

Hereinafter, examples of the present invention and comparative examples are described. These examples, however, are not in any sense to be interpreted as limiting the scope of the invention.

### (Example 1)

86.1 wt% of a negative active material including a silicon core and a soft carbon amorphous layer on the surface of the core, 5.7 wt% of an artificial graphite conductive material, 0.3 wt% of a single-walled carbon nanotube conductive material, 4.0 wt% of a carbon black conductive material, and 2.6 wt% of a styrene-butadiene rubber binder, and 1.3 wt% of a carboxymethyl cellulose thickener were mixed in a water solvent to prepare a negative active material layer slurry with a viscosity of 1500 cps (at 25 °C).

After disposing a Cu foil under a magnet having a magnetic field strength of 4000 Gauss, the negative active material layer slurry was coated on the Cu foil to expose a magnetic field for 5 seconds, dried, and then pressurized to prepare a negative electrode.

The negative electrode, a LiCoO₂ positive electrode, and an electrolyte were used to fabricate a rechargeable lithium cell (full cell). The electrolyte was prepared by using a mixed solvent of ethylene carbonate, ethylmethyl carbonate, and dimethyl carbonate (a volume ratio of 20:10:70) and dissolving 1.5 M LiPF₆ therein.

### (Example 2)

84.1 wt% of a negative active material including a silicon core and a soft carbon amorphous layer on the surface of the core, 7.7 wt% of an artificial graphite conductive material, 0.3 wt% of a single-walled carbon nanotube conductive material, 4.0 wt% of a carbon black conductive material, and 2.6 wt% of a styrene-butadiene rubber binder, and 1.3 wt% of a carboxymethyl cellulose thickener were mixed in a water solvent to prepare a negative active material layer slurry with a viscosity of 1500 cps (at 25 °C).

Using the negative active material layer slurry, a negative electrode was fabricated by the same procedure as in Example 1. A rechargeable lithium battery was fabricated by the same procedure as in Example 1 by using the negative electrode.

### (Example 3)

81.1 wt% of a negative active material including a silicon core and a soft carbon amorphous layer on the surface of the core, 10.7 wt% of an artificial graphite conductive material, 0.3 wt% of a single-walled carbon nanotube conductive material, 4.0 wt% of a carbon black conductive material, and 2.6 wt% of a styrene-butadiene rubber binder, and 1.3 wt% of a carboxymethyl cellulose thickener were mixed in a water solvent to prepare a negative active material layer slurry.

Using the negative active material layer slurry, a negative electrode was fabricated by the same procedure as in Example 1. A rechargeable lithium battery was fabricated by the same procedure as in Example 1 by using the negative electrode.

### (Example 4)

After disposing a Cu foil under a magnet having a magnetic field strength of 6000 Gauss, the negative active material layer slurry of Example 1 was coated on the Cu foil to expose a magnetic field for 5 seconds, dried, and then pressurized to prepare a negative electrode. Using the negative electrode, a rechargeable lithium battery was fabricated by the same procedure as in Example 1.

### (Comparative Example 1)

86.1 wt% of a silicon negative active material, 5.7 wt% of an artificial graphite conductive material, 0.3 wt% of a single-walled carbon nanotube conductive material, 4.0 wt% of a carbon black conductive material, and 2.6 wt% of a styrene-butadiene rubber binder, and 1.3 wt% of a carboxymethyl cellulose thickener were mixed in a water solvent to prepare a negative active material layer slurry.

Using the negative active material layer slurry, a negative electrode was fabricated by the same procedure as in Example 1. A rechargeable lithium battery was fabricated by the same procedure as in Example 1 by using the negative electrode.

### (Comparative Example 2)

95.1 wt% of a negative active material including a silicon core and a soft carbon amorphous layer on the surface of the core, 0.5 wt% of an artificial graphite conductive material, 0.3 wt% of a single-walled carbon nanotube conductive material, 2.0 wt% of a carbon black conductive material, and 2.6 wt% of a styrene-butadiene rubber binder, and 1.3 wt% of a carboxymethyl cellulose thickener were mixed in a water solvent to prepare a negative active material layer slurry.

Using the negative active material layer slurry, a negative electrode was fabricated by the same procedure as in Example 1. A rechargeable lithium battery was fabricated by the same procedure as in Example 1 by using the negative electrode.

### (Comparative Example 3)

91.1 wt% of a negative active material including a silicon core and a soft carbon amorphous layer on the surface of the core, 2.7 wt% of an artificial graphite conductive material, 0.3 wt% of a single-walled carbon nanotube conductive material, 2.0 wt% of a carbon black conductive material, and 2.6 wt% of a styrene-butadiene rubber binder, and 1.3 wt% of a carboxymethyl cellulose thickener were mixed in a water solvent to prepare a negative active material layer slurry.

Using the negative active material layer slurry, a negative electrode was fabricated by the same procedure as in Example 1. A rechargeable lithium battery was fabricated by the same procedure as in Example 1 by using the negative electrode.

### (Reference Example 1)

After disposing a Cu foil under a magnet having a magnetic field strength of 10000 Gauss, the negative active material layer slurry of Example 1 was coated on the Cu foil to expose a magnetic field for 5 seconds, dried, and then pressurized to prepare a negative electrode. Using the negative electrode, a rechargeable lithium battery was fabricated by the same procedure as in Example 1.

### (Comparative Example 4)

A negative electrode was prepared by the same procedure as in Example 1, except for using a negative active material including secondary particles having an average particle diameter (D50) of 5 µm in which silicon primary particles having an average particle diameter (D50) of 100 nm were agglomerated, and the soft carbon on the surface of the secondary particles. A rechargeable lithium battery was fabricated by the same procedure as in Example 1 by using the negative electrode.

### Experimental Example 1) Measurement of X-ray diffraction Characteristic

As for the rechargeable lithium battery according to Examples 1 to 4, Comparative Examples 1 to 4, and Reference Example 1, XRD was measured by using a CuKα ray as a target ray. The peak intensity ratio at a (110) plane relative to a (002) plane was measured. The results are shown in Table 1, as orientation ratio.

### Experimental Example 2) Evaluation of Cycle-life Characteristic

The rechargeable lithium cells according to Examples 1 to 4, Comparative Examples 1 to 4, and Reference Example 1 were charged and discharged at 1 C for 150 cycles. The ratio of discharge capacity at the 150^{th} cycle to discharge capacity at the 1^{st} cycle was calculated. The results are shown in Table 1

### Experimental Example 3) Measurement of DC-IR (Direct current internal resistance)

The rechargeable lithium cells according to Examples 1 to 4, Comparative Examples 1 to 4, and Reference Example 1 were constant current! constant voltage charged under a condition of 0.2 C, 4.25 V, and a 0.05 C cut-off at 25 °C, paused for 10 minutes, constant current discharged under a condition of 0.33 C and a 2.80 V cut-off, and paused for 10 minutes as one cycle, and this cycle was repeated 150 times. In each cycle, a voltage drop (V) was measured, while a current flew at 1 C for 1 second under a SOC50 (charged to be 50 % of charge capacity based on 100 % of entire battery charge capacity, which is 50 % discharged in a discharge state). The results are shown in Table 1, as a DC internal resistance (DC-IR).

### Experimental Example 4) Measurement of Expansion Rate

The rechargeable lithium cells according to Examples 1 to 4, Comparative Examples 1 to 4, and Reference Example 1 were charged and discharged at 1 C for 20 cycles. A ratio of the cell thickness after charge and discharge for 20 cycles to the cell thickness before charge and discharge was obtained. The results are shown in Table 1, as thickness expansion rate.

**Table 1**

| | Orientatio n ratio | DC-resistance increase rate (%) | Capacity retention (%) | Expansion rate (%) |
|---|---|---|---|---|
| Example 1 | 1.061 | 106 | 89.8 | 22.6 |
| Example 2 | 1.138 | 106.5 | 89.1 | 24.4 |
| Example 3 | 1.186 | 108.3 | 88.9 | 25.1 |
| Example 4 | 1.307 | 111.5 | 86.9 | 26.3 |
| Comparative Example 1 | 1.093 | 145.6 | 21.3 | 79.0 |
| Comparative Example 2 | 0.926 | 123 | 35.6 | 52.6 |
| Comparative Example 3 | 0.930 | 109 | 58.2 | 43.9 |
| Reference Example 1 | 2.597 | 136 | 67.8 | 36.1 |
| Comparative Example 4 | 1.847 | 113.7 | 85.6 | 31.3 |

As shown in Table 1, Examples 1 to 4 using the negative active material in which the core consisted of silicon and the carbon-based conductive material at 10 wt% or more was used, exhibited a peak intensity ratio (I₍₁₁₀₎/I₍₀₀₂₎) of 1.0 or more, excellent capacity retention and low DC resistance increase rates and expansion rate.

Otherwise, Comparative Example 1 using the silicon negative active material without the amorphous carbon layer exhibited extremely low capacity retention, and very high DC resistance increase rates and expansion rate.

Comparative Examples 2 and 3 using the conductive material at a small amount, i.e., 1 wt% and 5 wt%, respectively, exhibited low peak intensity ratio (I₍₁₁₀₎/I₍₀₀₂₎) of less than 1.0, low capacity retention, and high DC resistance increase ratio and expansion rate.

Reference Example 1 in which the carbon-based conductive material was used at 10 wt% or more and the negative active material including the core consisting of silicon were used, but had the extreme high peak intensity ratio (I ₍₁₁₀₎/I₍₀₀₂₎) of 2.597, exhibited slightly improved capacity retention which was lower than those of Example 1 to 4, and high DC resistance increase rates and expansion rate.

Comparative Example 4 using the Si-C composite as the core, exhibited high peak intensity ratio (I₍₁₁₀₎/I₍₀₀₂₎) of 1.847, and improved capacity retention which were slightly lower than those of Examples 1 to 4, and high DC resistance increase rates and too high expansion rate.

While this invention has been described in connection with what is presently considered to be practical example embodiments, it is to be understood that the invention is not limited to the disclosed embodiments, but, on the contrary, is intended to cover various modifications and equivalent arrangements included within the scope of the appended claims. Therefore, the aforementioned embodiments should be understood to be examples but not limiting the present invention in any way.

## Claims

1. A negative electrode for a rechargeable lithium battery, comprising:
a negative active material layer comprising a negative active material including a silicon core and an amorphous carbon layer on a surface of the core, and a carbon-based conductive material,
wherein an amount of the carbon-based conductive material is about 10 wt% or more based on the total, 100 wt% of the negative active material layer, and,
the negative electrode has a peak intensity ratio (I₍₁₁₀₎/I₍₀₀₂₎) at a (110) plane relative to a (002) plane of about 1.0 or more measured by XRD.

2. The negative electrode for a rechargeable lithium battery as claimed in claim 1, wherein the amount of the carbon-based conductive material is about 10 wt% to about 20 wt% based on the total, 100 wt% of the negative active material layer.

3. The negative electrode for a rechargeable lithium battery as claimed in claim 1, wherein the amount of the carbon-based conductive material is about 10 wt% to about 15 wt% based on the total, 100 wt% of the negative active material layer.

4. The negative electrode for a rechargeable lithium battery as claimed in any one of claims 1 to 3, wherein the peak intensity ratio (I₍₁₁₀₎/I₍₀₀₂₎) is about 1.0 to about 1.4.

5. The negative electrode for a rechargeable lithium battery as claimed in any one of claims 1 to 3, wherein the peak intensity ratio (I₍₁₁₀₎/I₍₀₀₂₎) is about 1.0 to about 1.3.

6. The negative electrode for a rechargeable lithium battery as claimed in any one of claims 1 to 5, wherein the XRD is measured by using a CuKα ray as a target ray.

7. The negative electrode for a rechargeable lithium battery as claimed in any one of claims 1 to 6, wherein the amorphous carbon is soft carbon, hard carbon, mesophase pitch carbide, sintered cokes, or combinations thereof.

8. The negative electrode for a rechargeable lithium battery as claimed in any one of claims 1 to 7, wherein the carbon-based conductive material is natural graphite, artificial graphite, carbon black, carbon nanotube, carbon fiber, or combinations thereof.

9. The negative electrode for a rechargeable lithium battery as claimed in any one of claims 1 to 8, wherein the carbon-based conductive material is a three-mixture of carbon nanotube; natural graphite or artificial graphite; and carbon black.

10. A rechargeable lithium battery
a negative electrode of any one of claims 1 to 9;
a positive electrode comprising a positive active material; and
a non-aqueous electrolyte.
